# EUROPEAN PATENT SPECIFICATION

(11) **EP 4 002 782 B1**
(45) Date of publication and mention of the grant of the patent: **14.12.2022**
(21) Application number: 21170045.5
(22) Date of filing: 23.04.2021
(51) Int. Cl.: H04L 25/02

(54) **METHOD, APPARATUS, AND SYSTEM FOR UPLINK CHANNEL ESTIMATION IN TIME DOMAIN**
VERFAHREN, VORRICHTUNG UND SYSTEM ZUR UPLINK-KANALSCHÄTZUNG IM ZEITBEREICH
PROCÉDÉ, APPAREIL ET SYSTÈME D'ESTIMATION DE CANAL DE LIAISON MONTANTE DANS LE DOMAINE TEMPOREL

(30) Priority: 19.11.2020 US 202063116022 P
(43) Date of publication of application: 25.05.2022
(73) Proprietor: Hon Lin Technology Co., Ltd., Tapei 114 (TW)
(72) Inventor: WU, Wen-Rong, Taipei City 114 (TW); WU, Ming-Lun, Taipei City 114 (TW); HSIAO, Wei-Han, Taipei City 114 (TW); SERVETNYK, Mykola, Taipei City 114 (TW)
(74) Representative: Zaboliene, Reda

(56) References cited:
- WO-A1-2019/196121
- US-A1- 2008 032 630
- US-A1- 2010 074 358
- US-A1- 2010 197 264
- UGURLU UMUT ET AL: "A Multipath Extraction-Based CSI Acquisition Method for FDD Cellular Networks With Massive Antenna Arrays", IEEE TRANSACTIONS ON WIRELESS COMMUNICATIONS, IEEE SERVICE CENTER, PISCATAWAY, NJ, US, vol. 15, no. 4, 1 April 2016 (2016-04-01), pages 2940-2953, XP011605970, ISSN: 1536-1276, DOI: 10.1109/TWC.2015.2513402 [retrieved on 2016-04-07]

## Description

### FIELD

The subject matter herein generally relates to wireless communications, and more particularly, to a method for uplink channel estimation in time domain, a system, and an apparatus thereof.

### BACKGROUND

In orthogonal frequency division multiplexing (OFDM) systems, channel estimation is usually performed in frequency domain. However, for channels which are sparse, such as mmWave, frequency domain estimation is not efficient.

Time domain estimation could be a solution, and angle estimation could be performed at the same time, but there are only a limited number of pilots which can be obtained from user equipment in uplink, which makes time domain channel estimation difficult.

Achieving a performance target in uplink channel estimation with a limited number of pilots is problematic.

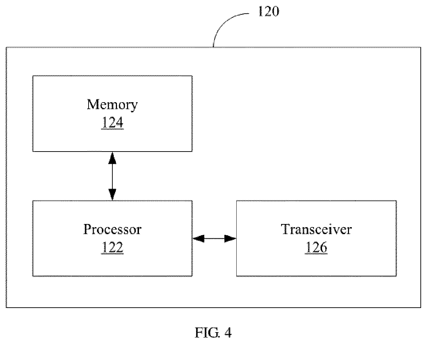

Document US 2008/032630 A1, describes a technique for efficiently deriving uplink channel estimates by employing, not only the pilot signal but a request channel, REQCH (see paragraphs [0009] and [0010] Documents WO 2019/196121 A1 and UGURLU UMUT ET AL: "A Multipath Extraction-Based CSI Acquisition Method for FDD Cellular Networks With Massive Antenna Arrays", IEEE TRANSACTIONS ON WIRELESS COMMUNICATIONS, IEEE SERVICE CENTER, PISCATAWAY, NJ, US, vol. 15, no. 4, 1 April 2016 (2016-04-01), pages 2940-2953, XP011605970, illustrate downlink channel estimation for precoding purposes. Document US 2010/197264 A1 discloses a well-known uplink channel estimation scheme based on received pilots (see abstract and Fig. 4).

### BRIEF DESCRIPTION OF THE DRAWINGS

Implementations of the present technology will now be described, by way of embodiment, with reference to the attached figures, wherein:
FIG. 1 is a schematic diagram of one embodiment of a system for uplink channel estimation in time domain, including a base station and a user equipment.
FIG. 2 is a flow chart of one embodiment of a method for uplink channel estimation in time domain.
FIG. 3 is a block diagram of one embodiment of the base station of FIG. 1.
FIG. 4 is a block diagram of one embodiment of the user equipment of FIG. 1.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

References to "an" or "one" embodiment in this disclosure are not necessarily to the same embodiment, and such references mean "at least one".

In general, the word "module" as used hereinafter, refers to logic embodied in computing or firmware, or to a collection of software instructions, written in a programming language, such as, Java, C, or assembly. One or more software instructions in the modules may be embedded in firmware, such as in an erasable programmable read only memory (EPROM). The modules described herein may be implemented as either software and/or computing modules and may be stored in any type of non-transitory computer-readable medium or other storage device. Some non-limiting examples of non-transitory computer-readable media include CDs, DVDs, BLU-RAY, flash memory, and hard disk drives. The term "comprising", when utilized, means "including, but not necessarily limited to"; it specifically indicates open-ended inclusion or membership in a so-described combination, group, series, and the like.

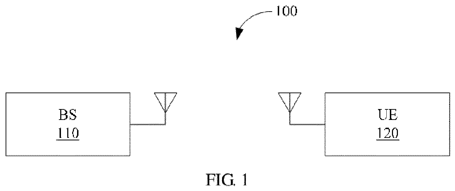

FIG. 1 illustrates a system 100. The system 100 comprises at least one base station (BS) 110 and user equipment (UE) 120. The BS 110 is an apparatus that is deployed in a wireless network and that is configured to provide wireless communication functions for the UE 120. In one embodiment, the BS 110 comprises macro-cell base stations, micro-cell base stations, femto-cell base stations, pico-cell base stations, small cell base stations, relay stations, access points, or the like. The BS 110 comprises one or more antennas for receiving and transmitting signals from and to the UE 120. Similarly, the UE 120 comprises one or more antennas for receiving and transmitting signals from and to the BS 110. The signals are transmitted and received over one or more atmospheric interfaces.

A resource block (RB) is the smallest unit of resources that can be allocated to a UE in the current 3GPP standard. The RB of the 5^{th} generation new radio (5G NR) consists of 12 consecutive subcarriers in the frequency domain. In general, only a limited number of RBs are allocated to the UE 120 for transmitting data. Since the pilots in uplink are also limited, channel estimation is more difficult than that in downlink.

For example, assume the number of RBs allocated for the UE 120 is N_{RB}, and the minimum number of RBs required for uplink channel estimation is N_{RM}. If N_{RB} ≥ N_{RM} , channel estimation can be performed in the same way as in downlink. It should be understood that, for the same N_{RB}, N_{RM} may be different for different RB allocation patterns. If N_{RB}≤ N_{RM}, channel estimation becomes problematic. In this case, it is apparent that a smaller N_{RM} is desirable for uplink channel estimation.

As described above, when N_{RB}≤ N_{RM}, the performance of the uplink channel estimation is poor. To overcome the problem of limited number of pilots, in one embodiment, the BS110 performs channel estimation based on feedback provided by the UE 120. In the embodiment, the UE 120 can provide feedback about the tap positions of the channel that it estimated. If channel are sparse, the number of taps is very small, and the required overhead for the UE 120 would also be small. With the feedback, the BS 110 can perform time domain channel estimation with a least-squares (LS) method based on the tap positions.

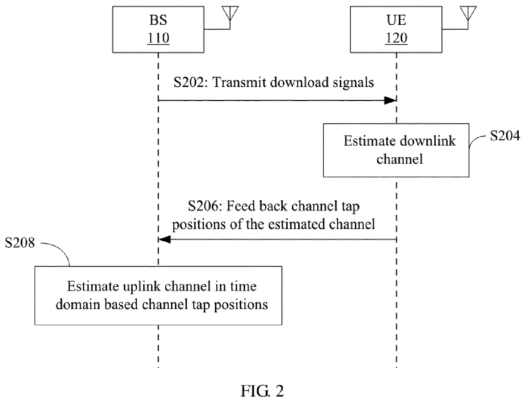

FIG. 2 illustrates a flow chart for uplink channel estimation in time domain according to one embodiment. In this embodiment, the BS 110 provides a communication service (which is generally called a cell) for the UE 120. It should be noted that the underlying concept of the present embodiment(s) does not change if one or more blocks (or steps) were added to or removed from the flow.

Step S202, the BS 110 transmits downlink signals to the UE 120. In the embodiment, the downlink signals comprise reference signals. In one embodiment, the reference signals comprise cell-specific reference signals (CRSs). The CRSs for different cells are different and can be used to perform channel estimation in interference-heavy environments.

Step S204, the UE 120 estimates downlink channel based on the received downlink signals. In one embodiment, the UE 120 identifies the reference signals from the received downlink signals and estimates downlink channel based on the identified reference signals. In one embodiment, the UE 120 estimates downlink channel using a least square (LS) method, and obtains channel impulse responses (CIRs) during the estimation. In addition, the UE 120 can determine channel tap positions of significant channel tap values from channel tap values of the CIRs. The significant channel tap values are channel tap values that are greater than or equal to a threshold value or non-zero channel tap values in the CIRs.

Step S206, the UE 120 feeds back channel tap positions to the BS 110.

In one embodiment, the UE 120 adjusts number of bits to represent each channel tap position to comply with a predetermined feedback bits limitation, in order to reduce the feedback overhead. Then the BS 110 applies a matching pursuit (MP) method to the received feedback to identify channel tap positions. The number of OFDM symbols included in a slot may depend on a channel bandwidth and the length of a cyclic prefix (CP). For example, assuming the length of the CP is *L* bits, then each tap position requires log₂(*L*) bits to represent it. If the number of channel taps is defined as *N,* then the required number of bits for feedback would be *N*×log₂(*L*). In another example, the required number of representative bits is further adjusted as (log₂(L)-*M*), then the required number of bits for feedback would be reduced as *N*×(log₂(*L*)-*M*)*.* In this example, the BS 110 then has to search 2*^{M}* positions for each tap with the MP based method, which is also called a constrained MP method. More searches will result in poorer performance. Thus there is a tradeoff between the performance of channel estimation and the feedback overhead.

Step S208, the BS 110 estimates uplink channel in time domain based on the channel tap positions and pilots transmitted by the UE 120. It should be understood that, for either time division duplexing (TDD) or frequency division duplexing (FDD) system, the channel taps delays for uplink and downlink are similar. In one embodiment, the BS 110 uses the LS method to estimate uplink channel. It should be understood that, if pilots cover a wide spectrum, channel estimation can be better performed. In one embodiment, in order to meet a target performance, the BS 110 allocates RBs to the UE 120 using a uniform distribution. In another embodiment, the UE 120 adjusts pilot density in each RB to a predetermined value. For example, there are six pilots included in each RB for demodulation reference signal (DM-RS) type-A position. Since the pilot density in each RB is higher, interference in relation to tap selection in the MP based method is also higher. This is to say that more pilots may not lead to better results. On the other hand, since uplink only uses a portion of the available bandwidth for transmission, the pilot density in each RB has a great impact on channel estimation. In the case, the pilot density in each RB can be adjusted to four pilots in each RB for DM-RS type-A position.

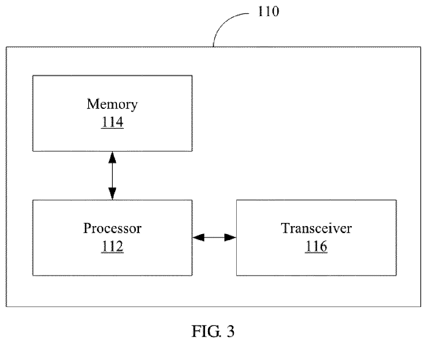

FIG. 3 illustrates a block diagram of the BS 110 according to one embodiment. The BS 110 comprises a processor 112, a memory 114, and a transceiver 116. The processor 112 comprises a microcontroller, a microprocessor, a complex instruction set arithmetic microprocessor, a reduced instruction set arithmetic microprocessor, an ultra-long instruction set microprocessor, an ultra-parallel instruction set arithmetic microprocessor, and a digital signal processor or other circuit with computational capabilities. The processor 112 is configured to perform the method on the side of the BS 110 in FIG. 2. The memory 114 comprises a read-only memory (ROM), a random access memory (RAM), a magnetic storage medium device, an optical storage medium device, a flash memory device, an electrical, optical, or other computer-readable storage medium device which is physical/tangible and is non-transitory. The memory 114 is coupled with the processor 112 to store one or more computer programs that control the operation of the BS 110, and are executed by the processor 112. The transceiver 116 is coupled with the processor 112 to transmit and/or receive radio signals.

FIG. 4 illustrates a block diagram of the UE 120 according to one embodiment. The UE 120 comprises a processor 122, a memory 124, and a transceiver 126. The processor 122 comprises a microcontroller, a microprocessor, a complex instruction set arithmetic microprocessor, a reduced instruction set arithmetic microprocessor, an ultra-long instruction set microprocessor, an ultra-parallel instruction set arithmetic microprocessor, and a digital signal processor or other circuit with computational capabilities. The processor 122 is configured to perform the method on the side of the UE 120 in FIG. 2. The memory 124 comprises a read-only memory (ROM), a random access memory (RAM), a magnetic storage medium device, an optical storage medium device, a flash memory device, an electrical, optical, or other computer-readable storage medium device which is physical/tangible and is non-transitory. The memory 124 is coupled with the processor 122 to store one or more computer programs that control the operation of the UE 120, and which are executed by the processor 122. The transceiver 126 is coupled with the processor 122 to transmit and/or receive radio signals.

The embodiments shown and described above are only examples. Many details are often found in the relevant art and many such details are neither shown nor described. Even though numerous characteristics and advantages of the present technology have been set forth in the foregoing description, together with details of the structure and function of the present disclosure, the disclosure is illustrative only, and changes may be made in the detail, especially in matters of shape, size, and arrangement of the parts within the principles of the present disclosure, up to and including the full extent established by the broad general meaning of the terms used in the claims. It will therefore be appreciated that the embodiments described above may be modified within the scope of the claims.

## Claims

1. A method for uplink channel estimation in time domain, the method comprising:
transmitting, by a base station, downlink signals to a user equipment;
estimating, by the user equipment, downlink channel based on the received downlink signals; the method being **characterized by**:
feeding back, by the user equipment, channel tap positions to the base station; and
estimating, by the base station, uplink channel in time domain based on the channel tap positions and pilots transmitted by the user equipment.

2. The method of claim 1, wherein the downlink signals comprise: cell-specific reference signals.

3. The method of claim 1, wherein the method further comprises:
obtaining, by the user equipment, channel impulse signals during downlink channel estimation; and
determining, by the user equipment, channel tap positions of significant channel tap values from channel tap values of the channel impulse signals, wherein the significant channel tap values are channel tap values that are greater than or equal to a threshold value.

4. The method of claim 1, wherein the step of feeding back, by the user equipment, channel tap positions to the base station further comprises:
adjusting, by the user equipment, number of bits to represent each of channel tap positions to comply a predetermined feedback bits limitation; and
applying, by the base station, a matching pursuit method to the received feedback to identity channel tap positions.

5. The method of claim 1, wherein the method further comprises:
allocating, by the base station, resource blocks to the user equipment using a uniform distribution.

6. The method of claim 5, wherein the method further comprises:
adjusting, by the user equipment, pilot density in each of allocated resource blocks to a predetermined value.

7. A system for uplink channel estimation in time domain, the system comprising a base station and a user equipment, wherein:
the base station is configured to transmit downlink signals to the user equipment,
the user equipment is configured to estimate downlink channel based on the received downlink signals and feed back channel tap positions to the based station, and
the base station is further configured to estimate uplink channel in time domain based on the channel tap positions and pilots transmitted by the user equipment.

8. The system of claim 7, wherein the downlink signals comprise: cell-specific reference signals.

9. The system of claim 7, wherein the user equipment is further configured to:
obtain channel impulse signals during downlink channel estimation; and
determine channel tap positions of significant channel tap values from channel tap values of the channel impulse signals, wherein the significant channel tap values are channel tap values that are greater than or equal to a threshold value.

10. The system of claim 7, wherein the user equipment is further configured to:
adjust number of bits to represent each of channel tap positions to comply a predetermined feedback bits limitation; and the based station is further configured to
apply a matching pursuit method to the received feedback to identity channel tap positions.

11. The system of claim 7, wherein the base station is further configured to:
allocate resource blocks to the user equipment using a uniform distribution.

12. The system of claim 11, wherein the user equipment is further configured to:
adjust pilot density in each of allocated resource blocks to a predetermined value.

13. An apparatus for uplink channel estimation in time domain, comprising: a memory storing instructions; and a processor coupled to the memory and, when executing the instructions, configured for:
transmitting downlink signals to a user equipment;
receiving feedback information form the user equipment, wherein the feedback information comprises channel tap positions of downlink channel; and
estimating uplink channel in time domain based on the channel tap positions and pilots transmitted by the user equipment.

14. The apparatus of claim 13, wherein the downlink signals comprise: cell-specific reference signals.

15. The apparatus of claim 13, wherein the processor is further configured for:
applying a matching pursuit method to the received feedback information to identity the channel tap positions.

## Patentansprüche

1. Verfahren zur Uplink-Kanalschätzung im Zeitbereich, wobei das Verfahren umfasst:
Senden von Downlink-Signalen an ein Endgerät durch eine Basisstation;
Schätzen des Downlink-Kanals durch das Endgerät basierend auf den empfangenen Downlink-Signalen; wobei das Verfahren durch Folgendes gekennzeichnet wird:
Rückmelden der Kanalabgriffpositionen an die Basisstation durch das Endgerät; und
Schätzen des Uplink-Kanals im Zeitbereich durch die Basisstation auf der Grundlage der Kanalabgriffpositionen und Piloten, die vom Endgerät gesendet werden.

2. Verfahren nach Anspruch 1, wobei die Downlink-Signale umfassen: zellspezifische Referenzsignale.

3. Verfahren nach Anspruch 1, wobei das Verfahren ferner umfasst:
Erhalten der Kanalimpulssignale während der Downlink-Kanalschätzung durch das Endgerät; und
Bestimmen der Kanalabgriffpositionen mit den signifikanten Kanalabgriffwerten aus Kanalabgriffwerten der Kanalimpulssignale durch das Endgerät, wobei die signifikanten Kanalabgriffwerte die Kanalabgriffwerte sind, die größer oder gleich einem Schwellenwert sind.

4. Verfahren nach Anspruch 1, wobei der Schritt der Rückmeldung der Kanalabgriffpositionen an die Basisstation durch das Endgerät ferner umfasst:
Anpassen einer Anzahl von Bits durch das Endgerät, um jede der Kanalabgriffpositionen darzustellen, um einer vorbestimmten Begrenzung von Rückmeldungsbits zu entsprechen; und
Anwenden eines Matching-Pursuit-Verfahrens auf die empfangene Rückmeldung durch die Basisstation, um die Kanalabgriffpositionen zu identifizieren.

5. Verfahren nach Anspruch 1, wobei das Verfahren ferner umfasst:
Zuweisen von Ressourcenblöcken zum Endgerät durch die Basisstation unter Verwendung einer gleichmäßigen Verteilung.

6. Verfahren nach Anspruch 5, wobei das Verfahren ferner umfasst:
Einstellen der Pilotdichte in jedem der zugewiesenen Ressourcenblöcke auf einen vorbestimmten Wert durch das Endgerät.

7. System zur Uplink-Kanalschätzung im Zeitbereich, wobei das System eine Basisstation und ein Endgerät umfasst, wobei:
die Basisstation so konfiguriert ist, dass sie Downlink-Signale an das Endgerät sendet,
das Endgerät so konfiguriert ist, dass es den Downlink-Kanal basierend auf den empfangenen Downlink-Signalen schätzt und Kanalabgriffpositionen an die Basisstation zurückmeldet, und
die Basisstation ferner konfiguriert ist, um den Uplink-Kanal im Zeitbereich basierend auf den Kanalabgriffpositionen und Piloten, die vom Endgerät gesendet werden, zu schätzen.

8. System nach Anspruch 7, wobei die Downlink-Signale umfassen: zellspezifische Referenzsignale.

9. System nach Anspruch 7, wobei das Endgerät ferner so konfiguriert ist, dass es:
Kanalimpulssignale während der Downlink-Kanalschätzung erhält; und
Kanalabgriffpositionen mit signifikanten Kanalabgriffwerten aus Kanalabgriffwerten der Kanalimpulssignale bestimmt, wobei die signifikanten Kanalabgriffwerte die Kanalabgriffwerte sind, die größer oder gleich einem Schwellenwert sind.

10. System nach Anspruch 7, wobei das Endgerät ferner so konfiguriert ist, dass es:
die Anzahl von Bits anpasst, um jede der Kanalabgriffpositionen darzustellen, um einer vorbestimmten Begrenzung von Rückmeldungsbits zu entsprechen; und die Basisstation ferner so konfiguriert ist,
um ein Matching-Pursuit-Verfahren auf die empfangene Rückmeldung anzuwenden, um die Kanalabgriffpositionen zu identifizieren.

11. System nach Anspruch 7, wobei die Basisstation ferner konfiguriert ist, um:
Ressourcenblöcken zu den Endgeräten unter Verwendung einer gleichmäßigen Verteilung zuzuweisen.

12. System nach Anspruch 11, wobei das Endgerät ferner so konfiguriert ist, um:
die Pilotdichte in jedem der zugewiesenen Ressourcenblöcke auf einen vorbestimmten Wert einzustellen.

13. Vorrichtung zur Uplink-Kanalschätzung im Zeitbereich, umfassend: einen Speicher, der Anweisungen speichert, und einen Prozessor, der mit dem Speicher gekoppelt ist; und, wenn sie die Anweisungen ausführt, so konfiguriert ist, um:
Downlink-Signale an ein Endgerät zu übertragen;
Rückmeldungsinformationen vom Endgerät zu empfangen, wobei die Rückmeldungsinformationen die Kanalabgriffpositionen des Downlink-Kanals umfassen; und
den Uplink-Kanal im Zeitbereich basierend auf den Kanalabgriffpositionen und Piloten, die vom Endgerät gesendet werden, zu schätzen.

14. Vorrichtung nach Anspruch 13, wobei die Downlink-Signale umfassen: zellspezifische Referenzsignale.

15. Vorrichtung nach Anspruch 13, wobei der Prozessor ferner konfiguriert ist um:
ein Matching-Pursuit-Verfahren auf die empfangene Rückmeldung anzuwenden, um die Kanalabgriffpositionen zu identifizieren.

## Revendications

1. Procédé d'estimation de canal de liaison montante dans le domaine temporel, le procédé comprenant :
la transmission, par une station de base, des signaux de liaison descendante à un équipement utilisateur ;
l'estimation, par l'équipement utilisateur, le canal de liaison descendante sur la base du canal de liaison descendante reçu sur la base des signaux reçus ; le procédé étant **caractérisé par** :
l'envoi, par l'équipement utilisateur, des positions de prise de canal à la station de base ; et l'estimation, par la station de base, le canal de liaison montante dans le domaine temporel sur la base des positions de prise de canal et des pilotes transmis par l'équipement utilisateur.

2. Procédé selon la revendication 1, dans laquelle les signaux de liaison descendante comprennent : des signaux de référence spécifiques à une cellule.

3. Le procédé selon la revendication 1, dans laquelle ce dernier comprend en outre un :
l'obtention, par l'équipement utilisateur, de signaux impulsionnels de canal pendant l'estimation du canal de liaison descendante ; et
la détermination, par l'équipement utilisateur, des positions de prise de canal de valeurs de prise de canal significatives à partir de valeurs de prise de canal des signaux impulsionnels de canal, dans lequel les valeurs de prise de canal significatives sont des valeurs de prise de canal qui sont supérieures ou égales à une valeur limite.

4. Procédé de la revendication 1, dans laquelle l'étape consistant à renvoyer, par l'équipement utilisateur, des positions de prise de canal à la station de base comprend en outre :
le réglage, par l'équipement utilisateur, du nombre de bits pour représenter chacune des positions de prise de canal afin de respecter une limitation prédéterminée des bits de retour ; et
l'application, par la station de base, d'un procédé de recherche de correspondance au retour d'information reçu pour identifier les positions de prise de canal.

5. Procédé de la revendication 1, dans laquelle le procédé comprend en outre :
l'attribution, par la station de base, de blocs de ressources à l'équipement utilisateur en utilisant une distribution uniforme.

6. Le procédé selon la revendication 5, dans laquelle ce dernier comprend en outre :
le réglage, par l'équipement utilisateur, la densité de pilotes dans chacun des blocs de ressources alloués à une valeur prédéterminée.

7. Système d'estimation de canal de liaison montante dans le domaine temporel, le système comprenant une station de base et un équipement utilisateur, dans lequel :
la station de base est configurée pour transmettre des signaux de liaison descendante à l'équipement utilisateur,
l'équipement utilisateur est configuré pour estimer le canal de liaison descendante sur la base des signaux de liaison descendante reçus et renvoyer les positions de prise de canal à la station de base, et
la station de base est en outre configurée pour estimer le canal de liaison montante dans le domaine temporel sur la base des positions de prise de canal et des pilotes transmis par l'équipement utilisateur.

8. Le système de la revendication 7, dans laquelle les signaux de liaison descendante comprennent : des signaux de référence spécifiques à une cellule.

9. Le système de la revendication 7, dans laquelle l'équipement utilisateur est en outre configuré pour :
obtenir des signaux impulsionnels de canal pendant l'estimation du canal de liaison descendante ; et
déterminer les positions de prise de canal des valeurs de prise de canal significatives de canal de valeurs de prise de canal significatives à partir de valeurs de prise de canal des signaux impulsionnels de canal, dans lequel les valeurs de prise de canal significatives sont des valeurs de prise de canal qui sont supérieures ou égales à une valeur limite.

10. Le système de la revendication 7, dans laquelle l'équipement utilisateur est en outre configuré pour :
régler le nombre de bits pour représenter chacune des positions de prise de canal afin de respecter une limitation prédéterminée des bits de retour ; et la station de base est en outre configurée pour
appliquer un procédé de recherche de correspondance au retour d'information reçu pour identifier les positions de prise de canal.

11. Le système de la revendication 7, dans laquelle la station de base est en outre configuré pour :
attribuer les blocs de ressources à l'équipement utilisateur en utilisant une distribution uniforme.

12. Le système de la revendication 11, dans laquelle l'équipement utilisateur est en outre configuré pour :
régler la densité du pilote dans chacun des blocs de ressources alloués à une valeur prédéterminée.

13. Un appareil d'estimation de canal de liaison montante dans le domaine temporel, comprenant : une mémoire stockant des instructions ; et un processeur couplé à la mémoire et, lors de l'exécution des instructions, configuré pour :
transmettre des signaux de liaison descendante à un équipement utilisateur ;
recevoir des informations de retour de l'équipement utilisateur, dans lequel ces informations de retour comprennent des positions de prise de canal du canal de liaison descendante ; et
estimer le canal de liaison montante dans le domaine temporel sur la base des positions de prise de canal et des pilotes transmis par l'équipement utilisateur.

14. L'appareil de la revendication 13, dans laquelle les signaux de liaison descendante comprennent : des signaux de référence spécifiques à une cellule.

15. L'appareil de la revendication 13, dans laquelle le processeur est en outre configuré pour :
appliquer un procédé de recherche de correspondance aux informations de retour reçues pour identifier les positions de prise de canal.
